# EUROPEAN PATENT APPLICATION

(11) **EP 1 186 628 A2**
(43) Date of publication of application: **13.03.2002**
(21) Application number: 01117426.5
(22) Date of filing: 19.07.2001
(51) Int. Cl.: C08K 3/36, C08L 67/02, C08G 63/78

(54) **Raw material dispersion for the manufacture of polyester, process for the preparation thereof, and process for the preparation of polyester products using the dispersion**

(30) Priority: 05.09.2000 JP 2000268662
(71) Applicant: Degussa AG, 40474 Düsseldorf (DE)
(72) Inventor: Mangold, Helmut, Dr., 63517 Rodenbach (DE); Ochiai, Mitsuru, Hasuda-City, 349-0113 (JP)

(57) **Abstract**

Raw material dispersion for the manufacture of polyester, wherein 1 to 60 parts by weight of silica powder with an average particle size of 5 to 50 nm are uniformly dispersed in glycols based on 100 parts by weight of the glycols.

The raw material dispersion for the manufacture of polymers is mixed with terephthalic acid or dimethyl terephthalate and subjected to esterification under pressure at a temperature of 200 to 300 °C to produce a polyester polymer. In case of that polyester fiber or polyester film is produced from the polyester polymer, the particle size of a silica powder agglomerate contained in said polyester fiber or polyester film is less than 5 µm.

## Description

### [Detailed explanation of the invention]

### [Technical field of the invention]

The present invention relates to raw material dispersions for the manufacture of polyester wherein the agglomeration of silica powder on heating and contact with acids is suppressed, and a process for the manufacture thereof. The invention further relates to a process for the manufacture of polyester products, such as polyester fibers and polyester films, in which process the said dispersion is used.

### [Prior art]

Polyester products are broadly employed in fibers and films since they exhibit excellent physical and chemical properties.

Nevertheless, in comparison with natural fibers, such as cotton, silk and wool, and semisynthetic fibers, such as rayon and acetate fiber, the polyester fiber is poor at color clarity and depth after dyeing. These problems are caused by refractivity, surface profile and shape of the fiber. The refractivity of polyester fiber is 1.6 to 1.7, which is higher than the refractivity of other fibers, which is 1.45 to 1.6. Generally the polyester fiber is manufactured by melt spinning, so that the surface thereof becomes considerably smother and its reflection factor for white light becomes large, which reduces hyperchromicity. Moreover, disadvantageously, the feeling on handling is hard, and it has poor feeling aspects, i.e. there is a particular slimy feeling.

Polyester film is problematic in that processing ability and productivity are diminished because of poor slidability. Moreover, because of its smooth surface, it is adhesive and susceptible to blocking.

In order to improve said dyeing ability and feeling of the polyester fiber, and to improve abrasion resistance, lubricating ability and mar resistance of the polyester film, in general finely divided, inorganic powder, such as silica and alumina, is incorporated with 1,2-ethanediol (ethylene glycol) as raw material.

For example, JP Patent Application Disclosure No. 7-316924 discloses polyester fiber containing finely divided inorganic powder, such as silica, aluminum oxide and titanium dioxide, the average particle size, content and specific surface of which are defined. The inorganic powder is prepared by an anhydrous method where aluminum halide is contained in silicon halide. The polyester fiber is manufactured by the use of a raw material dispersion in which said inorganic powder is uniformly dispersed in 1,2-ethanediol (ethylene glycol). In the produced polyester fiber, inorganic powder appears in the fiber surface. This fiber is brought into contact with an aqueous alkali solution to elute the inorganic powder on the fiber surface, so as to form fine voids in the fiber surface. A fabric is prepared by using the fiber with the voids, whereby hardness and slimy feeling disappear providing the fabric with a good feeling. On dyeing the fabric, a color with depth and clarity is obtainable.

JP Patent Application Disclosure No. 2000-17158 discloses polyester resin compositions, containing amorphous silica particles with an average particule size of 0.05 to 4.5 µm free from agglomeration derived from a synthesis in the presence of water, for obtaining a lubricating film with a uniform convex-concave surface without crude projection. The films, made from said composition by stretching, provide reduced abrasion due to reduction of contact surface area, and the hardness of the film material is improved by incorporation of inorganic powder within the film.

In the manufacture of said polyester, a raw material dispersion wherein silica powder is uniformly dispersed in 1,2-ethanediol (ethylene glycol) is mixed with an organic acid, such as terephthalic acid, and the mixture is pressurised and heated for esterification. Said silica powder dispersions have very good dispersability vis-à-vis 1,2-ethanediol (ethylene glycol) at normal temperature. Its slurry or solution is crushed and sieved, and added to 1,2-ethanediol (ethylene glycol).

### [Problems to be solved by the invention]

However, there is a problem: Because of the high reaction temperatures of the esterification reaction and influence of acids, the silica powder in the raw material dispersion can agglomerate due to heat shock or acid shock, depending on the properties of the silica powder, so that a silica powder agglomerate is formed. When the silica powder agglomerate is present in the polyester product, polyester fiber, for example, is susceptible to thread breakage during spinning, weaving and knitting. In case of magnetic tape films, scratch resistance becomes poor, electromagnetic transfer characteristic is reduced and it causes drop-out, so that the film quality is diminished.

For polyester fiber products with a higher additive value in aspects of handling and color, or high grade polyester films to be employed for magnetic record films, etc. silica powder that does not agglomerate during the esterification step is more preferable.

These requirements, are not satisfied even by use of silica powders as disclosed in JP Patent Application Disclosure No. 7-316924 and JP Patent Application Disclosure No. 2000-17158.

The purpose of the present invention is to provide raw material dispersions for the manufacture of polyesters without agglomeration of silica powder particles during mixing with terephthalic acid, esterification, or the like, and to a process for the preparation thereof.

Another purpose of the present invention is to provide a process for the manufacture of a fiber which does hardly break during spinning, weaving or knitting.

Another purpose of the present invention is to provide a method for the dyeing of polyester fibers providing polyester fabrics with deep colors and a good handling.

Another purpose of the present invention is to provide a process for the manufacture of polyester films with good abrasion resistance, lubricating properties and mar resistance, and which, in case of magnetic tape films, have improved scratch resistance, do not reduce the electromagnetic transfer characteristics, and do not cause drop-out.

### [Means for solving of the problem]

The concept of Claim 1 is a raw material dispersion for the manufacture of polyester wherein 1 to 60 parts by weight of silica powder with an average particle diameter of 5 to 50 nm are uniformly dispersed in glycols based on 100 parts by weight of the glycols, characterised in that the particle diameter of silica powder agglomerate contained in a polyester fiber or polyester film which is manufactured by blending the raw material dispersion with terephthalic acid or dimethyl terephthalate, esterification of the mixture under pressure at a temperature of 200 to 300 °C to produce the polyester and therefrom subsequently polyester fibers or polyester films is less than 5 µm.

In the concept of Claim 1, since the particle size of silica powder agglomerate contained in the produced polyester fiber of polyester film is less than 5 µm, the disadvantages caused by the silica powder agglomerate are eliminated.

The concept of Claim 3 is a process for the preparation of a raw material dispersion for the manufacture of polyester, characterised in that an aerosol is produced from an aqueous solution or aqueous dispersion of aluminum chloride, said aerosol is uniformly mixed with a gas mixture of silicon chloride or silanes and oxygen and hydrogen, said mixture of aerosol and gas mixture is subjected to flame hydrolysis to form a silica powder with an average particle diameter of 5 to 50 nm, which is doped with 0.05 to 1.0 % by weight of aluminum oxide, 1 to 60 parts by weight of said silica powder are added to glycols based on 100 parts by weight of the glycols, and uniformly dispersed, and subsequently, crude particles of a particle diameter of more than 5 µm contained in said dispersion are eliminated by filtration.

In the concept of Claim 3, an aerosol made by ultrasonic atomisation of an aqueous aluminum chloride solution or dispersion and a gas mixture composed of silicon chloride or silanes, oxygen and hydrogen are mixed to form silica powder by means of flame hydrolysis, and crude particles with a particle size exceeding 5 µm contained in the dispersion are removed by filteration, whereby the agglomeration of silica powders due to heat shock or acid shock during esterification almost disappears.

The concept of Claim 4 is a process for the manufacture of polyester fibers, wherein a raw material dispersion for the manufacture of polyester according to Claim 1 and terephthalic acid or dimethyl terephthalate are mixed, and simultaneously stirred to form a slurry, said slurry is maintained under pressure at 200 to 300 °C for 2 to 3

The films manufactured according to the process of Claim 7 have silica powder on the film surface, and, therefore, good abrasion resistance, lubricating properties and mar resistance. In comparison with conventional films, magnetic tape films of the present invention have better scratch resistance, do not reduce electromagnetic transfer characteristics, and do not cause drop-outs.

### [Embodiments of the invention]

In the following embodiments of the present invention are described.

The present raw material dispersion for the manufacture of polyester is prepared by uniformly dispersing fine divided silica powders into glycols. As glycols, there are 1,2-ethanediol (ethylene glycol), 1,3-propanediol (trimethylene glycol) or 1,4-butanediol (tetramethylene gycol), 1,6-hexanediol (hexamethylene glycol), etc. This silica powder exhibits an average particle diameter of 5 to 50 nm, and the surface layer thereof is doped with 0.05 to 1.0 % by weight of aluminum oxide. The preferable average particle diameter of the silica powder is 20 to 30 nm, and preferable amount of aluminum oxide is 0.08 to 0.32 % by weight. If the average diameter of the silica powder particles is less than 5 nm, the viscosity of the silica powder dispersion increases and if it exceeds 50 nm, the voids formed in the polyester fiber increase in size. If the amount of aluminum oxide is less than 0.05 % by weight or more than 1.0 % by weight, the viscosity of the silica powder dispersion increases inconveniently. The present silica powders are not generated as mixtures of separate silica particles and aluminum oxide particles, but consist of silica particles that are doped with aluminum oxide in the surface layer. They, therefore, differ from mixtures of silica and aluminum oxides in that they have not only characteristics of silica powders and aluminum oxide, but moreover characteristics which cannot be afforded by a simple mixture of aluminum oxide and silica. They exhibit, for instance, an excellent dispersability, providing, thereby, a desirable dispersion of low viscosity.

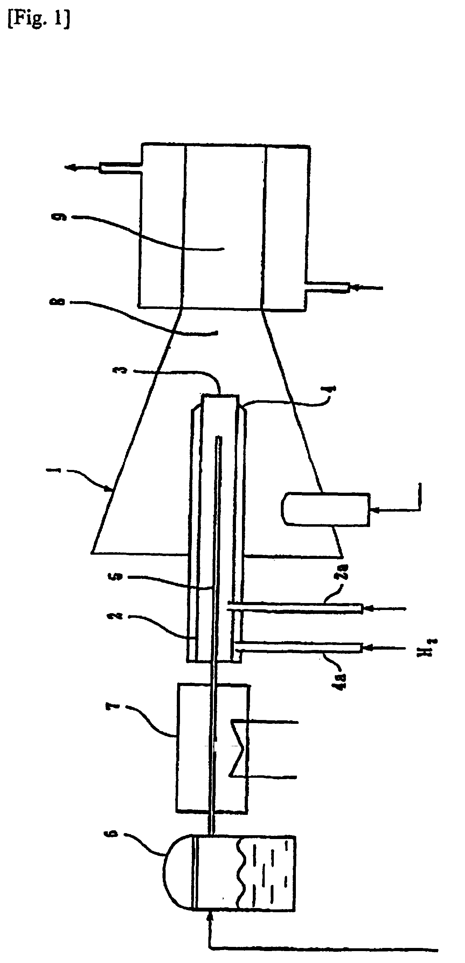

A device manufacturing such silica powders is disclosed in JP Patent Application Disclosure No. 2000-169132. As shown in Fig. 1, the device is characterised in that, for the preparation of oxide by the pyrolysis method , an additional axial flow tube 5 is arranged in the direction of the longitudinal axis within a burner 1 of conventional structure type in order to supply aerosol and the tubes opening is positioned in front of a nozzle 3 of the burner. The manufacture method of silica powders employed in the present invention is illustrated hereinafter.

A raw material mixture gas composed of silicon tetrachloride, hydrogen and air is introduced into the central tube 2 of the burner 1 via an feeding tube 2a. This raw material mixture gas flows out from nozzle 3 of the burner 1, and burns in the combustion chamber 8 and in a water-cooled flame tube 9 connected to said chamber. At the same time, in order to avoid burning at the nozzle, secondary hydrogen is introduced into a circular nozzle 4 surrounding the central tube 2 via an feeding tube 4a.

Also, the axial flow tube 5 is arranged within the central tube 2. An aerosol composed of aluminum chloride and water prepared in an aerosol generator 6 is fed from the axial flow tube 5 into the central tube 2, and is uniformly mixed with said raw material mixture gas prior to reaction. The mixture composed of the raw material mixture gas and the aerosol burns in a combustion chamber 8 and in a flame tube 9 connected to said chamber, to generate aluminum oxide-doped silica powder. Thus obtained aluminum oxide-doped silica is separated from outflow gas stream in the conventional manner, and supplied as product.

The aerosol composed of aluminum chloride and water, generated in the aerosol generator 6, is carried by a slow carrier gas stream and sent into heating zone 7. Entrained water evaporates in the heating zone 7, so that the aerosol composed of aluminum chloride and water probably converts into a dispersion of small salt crystals in a gas phase. The aerosol passes through the axial flow tube 5, and is uniformly mixed with said raw material mixture gas in the central tube 2. The aerosol is reacted with the raw material mixture gas in the flame to provide aluminum oxide-doped silica powder. Thus obtained aluminum oxide-doped silica powder definitely differs in the way the aluminum is present therein, from the pyrolysis method mixture oxide obtained by the conventionally known, so-called "co-fuming method", wherein simply SiCl4 gas and AlCl3 gas are previously mixed, and burned together in a flame reactor.

The present raw material dispersion for the manufacture of polyester is prepared by that 1 to 60 parts by weight, preferably 5 to 25 parts by weight of silica powder prepared by said manner are uniformly dispersed in 100 parts by weight of glycols. Subsequently the dispersion passes through a filter with a mesh size of 5 µm to remove crude particles with a particle size exceeding 5 µm. With less than 1 part by weight of a silica powder incorporation amount based on the glycols, the manufacture of polyester product using this raw material dispersion does not accomplish the purpose of the present invention. With over 60 parts by weight, the fluidity of the dispersion is reduced. The mesh size of 5 µm of the filter is chosen in order to exclude silica powder particles with a size of 5 µm and over prior to esterification as explained below. It is preferable to prepare the raw material dispersion by heating the dispersion approximately at the boiling point under reflux for at least 2 hours prior to filtration. By heating under reflux, formation of secondary particles of the silica powders is inhibited and agglomeration is suppressed.

When said dispersions are mixed with terephthalic acid or dimethyl terephthalate as raw material for the manufacture of polyesters, and esterified under pressure at a temperature of 200 to 300 °C, silica powder particles of 5 µm and over are not generated during esterification and are not present in the polyester product produced. Accordingly, in case of the manufacture of polyester fibers or polyester films products using chips made of this polyester polymer, even if the polyester product contains silica powder agglomerate, the particle size thereof is however less than 5 µm.

This raw material can be used as replacement in almost all the polyester manufacturing steps conventionally conducted as general techniques, without causing agglomeration during heating. However, in case other inorganic fine particles are simultaneously present, it is necessary to previously check agglomeration during heating and by acid shock by means of a small-scale reflux test, a terephthalic acid incorporation test, etc..

The present polyester fiber is manufactured in the following manner. Said raw material dispersion is mixed with terephthalic acid or dimethyl terephthalate, and at the same time stirred to form a slurry. Subsequently, the slurry is maintain under pressure at 200 to 300 °C for 2 to 3 hours to effect esterification between glycols and terephthalic acid or dimethyl terephthalate to generate polyester polymer. Next, the generated polyester polymer is processed into chips, the chips are thermally melted, the melt is spun by extrusion through a nozzle to provide polyester fiber.

Since silica powder agglomerate of 5 µm and over is not present in thus obtained polyester fiber, thread breakage during spinning, weaving or knitting of this fiber is reduced.

The present dyeing method of polyester fabric employs fabric, such as woven fabric and knitted fabric containing said polyester fiber. The yarn the fabric is constituted of may include not only spun yarn of 100 % polyester fiber, but also union yarn blended with natural fiber, such as cotton, silk and wool, or semisynthetic fibers, such as rayon and acetate fiber. It also may be union fabric or union knitting composed of spun yarn containing the polyester fiber, and spun yarn of said natural fibers and semisynthetic fibers.

The fabric is brought into contact with an aqueous alkali solution of 90 to 100 °C. As methods of contacting the fabric with aqueous alkali solution, there is a continuous method wherein a spread fabric is immersed in an aqueous alkali solution and mangled with two squeeze rollers under pressure, and a batchwise method wherein a fabric with both ends sewn up is placed in a dyeing machine, and subsequently circulated and immersed in an aqueous alkali solution. As aqueous alkali solution, there are aqueous solutions of sodium hydroxide, potassium hydroxide, sodium carbonate, potassium carbonate, tetramethylammonium oxide, etc. employable. Aqueous solutions of sodium hydroxide and potassium hydroxide are preferably employed. The concentration of the aqueous alkali solution varies depending on sorts of alkali compounds, treatment conditions, etc., but 1 to 10 % by weight is preferable. The aqueous alkali solution is kept at 90 to 100 °C, preferably 95 to 100 °C. The period of contact between aqueous alkali solution and fabric is adjusted so that the alkali weight-loss rate is 3 to 20 %. Due to the alkali treatment, silica powders present on the polyester fiber surface are eluted to form fine voids in the fiber surface. When the void containing fabric is dyed, refractivity of the fiber increases and color with depth is obtained. By the voids on the fiber surface, the hardness and slimy handling of the fabric are eliminated.

The present polyester film is manufactured as follows. To begin with, esterification, similar to the manufacture of polyester fiber, is conducted to generate polyester polymer. Next, the generated polyester polymer is processed into chips, the chips are thermally melted, the melt is extruded on a cooling rotary quenching drum to provide polyester film. Since the polyester film is thick and not stretched, the film is further stretched. For example, the film is initially stretched in extrusion direction, and next in the right-angled direction to the extrusion direction at ca. 100 °C and subsequently, thermally treated at ca. 210 °C for 3 seconds to provide a biaxially stretched film.

Since thus obtained polyester film contains silica powder at the film surface. It has a good abrasion resistance, lubricating properties and mar resistance. Because of absence of silica powder agglomerate particles of 5 µm or more, in case of magnetic tape film, the scratch resistance becomes good, the electromagnetic transfer characteristic is not reduced, and no drop-outs occur.

### [Examples]

Next, Examples of the present invention are illustrated together with Comparison Examples.

### Example 1

Using a device shown in Fig. 1, an aqueous aluminum chloride solution was atomised with ultrasonic sound to form an aerosol, which was then uniformly mixed with a gas mixture composed of silicon tetrachloride, oxygen and hydrogen. The mixture of the gas mixture and the aerosol (SiCl₄ + H₂ + O₂ +AlCl₃ + H₂O) was subjected to flame hydrolysis to produce silica powder with an average particle diameter of ca. 25 nm which was doped with 0.16 % by weight of aluminum oxide (hereinafter called Al-doped product).

### Comparative Example 1

Using a device shown in Fig. 1, silica powder was prepared by flame hydrolysis. In this example, the aerosol generator was not employed, and a raw material gas mixture of (SiCl₄ + H₂ + O₂ + AlCl₃) was subjected to flame hydrolysis, to provide silica powder with an aluminum oxide content of 1.01 % by weight and an average particle diameter of ca. 30 nm (hereinafter called Aerosil MOX80).

### Comparative Example 2

Using a device shown in Fig. 1, silica powder was prepared by flame hydrolysis. In this example, an aerosol generator was not employed, and a raw material gas mixture of (SiCl₄ + H₂ + O₂) was subjected to flame hydrolysis, to produce silica powder with an average particle diameter of ca. 40 nm (hereinafter called Aerosil OX50).

Main properties of the silica powders of Example 1, Comparative Example 1 and Comparative Example 2 are shown in Table 1.

**[Table 1]**

| | Product name of silica powder | Al₂O₃-converte d Al content (wt-%) | surface OH content (OH/nm²) | specific surface (m²/g) | primary particle average diameter (nm) |
|---|---|---|---|---|---|
| Example 1 | Al-doped product | 0.16 | 3.2 | 65 | 25 |
| Comparative Example 1 | Aerosil MOX80 | 1.01 | 2.3 | 80 | 30 |
| Comparative Example 2 | Aerosil OX50 | at most 0.001 | 2.2 | 50 | 40 |
| .................... | | | | | |

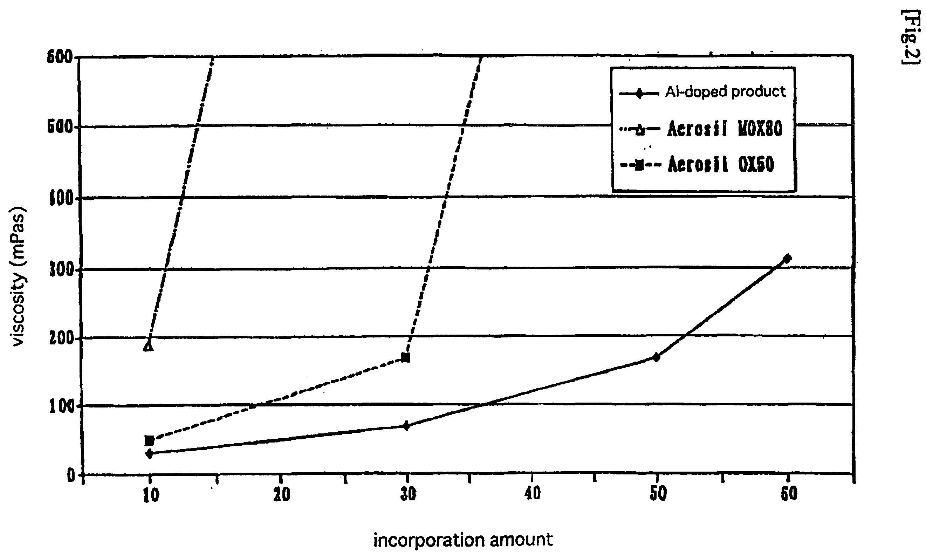

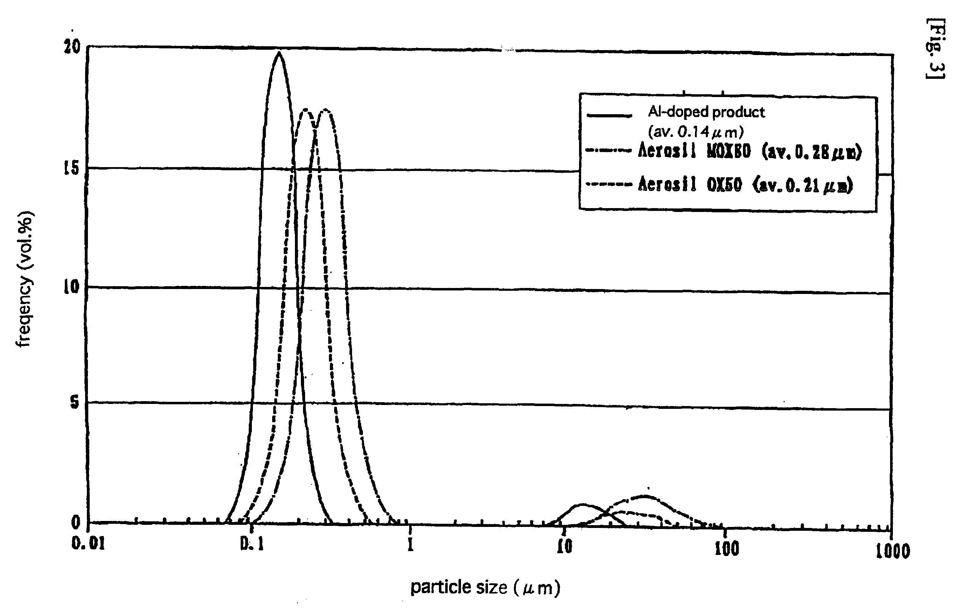

a) Viscosity of 1,2-ethanediol (ethylene glycol) dispersion:
   These three sorts of silica powder were incorporated in amounts of 10 parts by weight, 30 parts by weight and 50 parts by weight, respectively, based on 100 parts by weight of 1,2-ethanediol (ethylene glycol), under stirring into 1,2-ethanediol (ethylene glycol), whereby a 9.1 % by weight dispersion, a 23 % by weight dispersion, and a 33 % by weight dispersion each were prepared. Viscosity measurement results of the dispersions are shown in Fig. 2.
   As seen from Fig. 2, measurement of viscosity was impossible for the 23 % by weight dispersion of Aerosil MOX80 in Comparative Example 1 and for the 33 % by weight dispersion of Aerosil OX50 in Comparative Example 2, because of a steep rise in viscosity. Whereas, in case of the dispersion of the Al-doped product in Example 1, the viscosity rose mildly, with increase of the silica powder incorporation amount. At all concentrations, silica powder was quite easily dispersed in 1,2-ethanediol (ethylene glycol). Accordingly, exclusively in case of the Al-doped product of Example 1, a 37.5 % by weight dispersion was prepared, wherein 60 parts by weight were incorporated with 100 parts by weight of 1,2-ethanediol (ethylene glycol), and the viscosity of the dispersion was determined in the same manner. The result is shown in Fig. 2. As seen from Fig. 2, even the viscosity of a 37.5 % by weight dispersion of the Al-doped product of Example 1 was low.
b) Particle size distributions of silica powders in 1,2-ethanediol (ethylene glycol) dispersions before reflux:
   Next, using a laser diffraction particle size distribution measuring device, particle size distributions of silica particles in the dispersions at normal temperature, wherein silica particles of Example 1, Comparative Example 1 and Comparative Example 2 were respectively dispersed in an amount of 23 % by weight were measured. The results are shown in Fig. 3.
   As evident from Fig. 3, the Al-doped product of Example 1 comprised fine powder with a particle size of 0.08 to 0.4 µm exhibiting a peak at 0.14 µm in the dispersion as main component, and a small amount of powder with large particle size of 7 to 30 µm was simultaneously present therein. On the other hand, Aerosil MOX80 (a 16.7 % by weight dispersion based on 100 parts by weight of 1,2-ethanediol (ethylene glycol)) of Comparative Example 1 comprised a fine powder with a particle size of 0.09 to 0.6 µm exhibiting a peak at 0.28 µm in the dispersion as main component, and a small amount of powder with large particle size of 10 to 60 µm was simultaneously present therein. Aerosil OX50 of Comparative Example 2 comprised fine powder with a particle size of 0.1 to 0.8 µm exhibiting a peak at 0.21 µm in the dispersion as main component, and a small amount of powder with large particle size of 7 to 30 µm was simultaneously present therein.
c) Filter-passing-ability of the 1,2-ethanediol (ethylene glycol) dispersions:
   Next, a 23 % by weight dispersion of Al-doped product of Example 1 was filtered with a filter with a mesh size of 5 µm, and the above-mentioned crude particle portion of 7 to 30 µm could be easily filtered off. The filtration yield was 98 %. Similarly, 23 % by weight dispersions, of Aerosil MOX 80 of Comparative Example 1 and of Aerosil OX50 of Comparative Example 2, were filtered through the same filter, to separate the crude particle portion of 10 to 60 µm and the crude particle portion of 7 to 30 µm by filtration, respectively, but the liqiuids' fluidability was poor and a long time was required for the filtration in the former case.
d) Particle size distribution of silica powder after reflux of a dispersion in 1,2-ethanediol (ethylene glycol):
   Next, a filtered 23 % by weight dispersion of Al-doped product of Example 1 in ethylene glycol was put into a container with reflux condenser, heated to 195 to 200 °C, and refluxed for 2 hours.

In the same manner, dispersions, of Aerosil MOX80 of Comparative Example 1 and Aerosil OX50 of Comparative Example 2, respectively were subjected to heating under reflux.

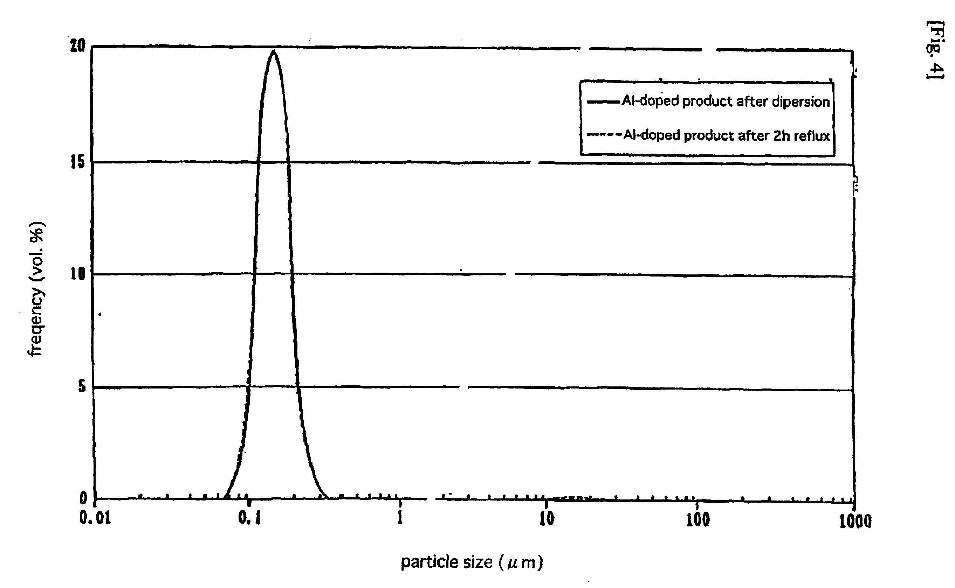

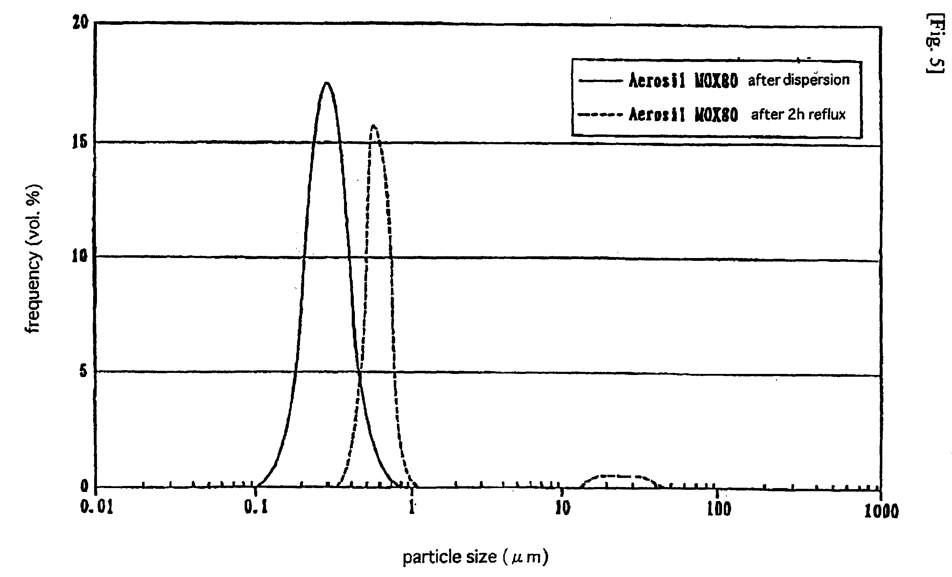

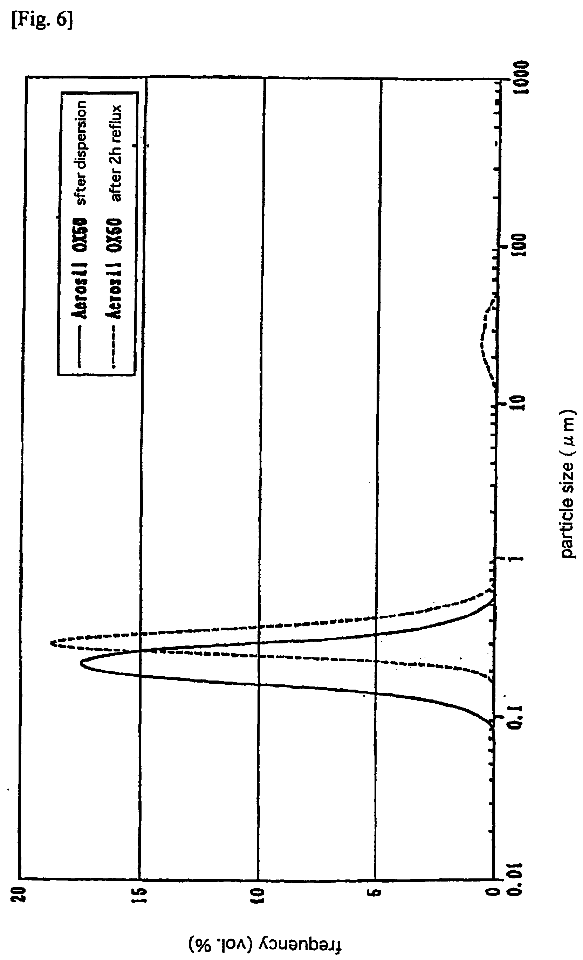

Particle size distributions curves at normal temperature, of each dispersion of Example 1, Comparative Example 1 and Comparative Example 2 after heating under reflux, were determined using a laser diffraction particle size distribution measurement device. The particle size distribution of Al-doped product of Example 1 after heating under reflux is shown in Fig. 4, the one of Aerosil MOX80 of Comparative Example 1 in Fig. 5, and the one of Aerosil OX50 in Fig. 6. In Figs. 4 to 6, solid lines stand for the particle size distributions before the heating under reflux, and dotted lines for the particle size distributions after heating under reflux.

As seen in Fig. 5 and Fig. 6, the peak of the particle size distribution of the main component shifts from 0.28 µm before heating under reflux to 0.7 µm after heating under reflux in case of Aerosil MOX80, and from 0.21 µm to 0.4 µm in case of Aerosil OX50, showing that silica powder agglomerates on heating under reflux. Whereas, as seen in Fig. 4, the Al-doped product of Example 1 does not agglomerate when heated under reflux. It contains particles with a particle size of 0.08 to 0.4 µm and exhibits a peak at 0.14 µm as main component, and contains a small amount of crude particle of 7 to 30 µm in dispersion. The particle size distribution curve after heating under reflux (dotted line in Fig. 4) was almost unchanged from the curve before the heating under reflux (solid line in Fig. 4).

### Example 2

A 20 % by weight dispersion of the Al-doped product of Example 1 was prepared. To begin with, the raw material dispersion was mixed with terephthalic acid so that the molar proportion of the ethylene glycol of the raw material dispersion and terephthalic acid is 1.2:1. The thus obtained mixture was put into an esterification reactor, and subjected to esterification under pressure at a temperature of 260 °C. Obtained esterified product easily passed through a filter with an average mesh size of 5 µm, and the amount of agglomerate was quite small. Subsequently, using Sb₂O₃ as polymerisation catalyst, polycondensation was conducted at 285 °C to provide polyester polymer.

Subsequently, the polyester polymer was processed into chips, and mixed with polymer chips free from inorganic fine particles to prepare a polyester polymer containing 0.25 % by weight of Al-doped product. Subsequently, thus prepared polyester polymer is melted and spun. In line with known technology stretching was effected to provide stretched polyester fiber.

### Example 3

A 20 % by weight dispersion of Al-doped product was prepared by using 1,3-propanediol (trimethylene glycol) in place of 1,2-ethanediol (ethylene glycol). In the same manner as in Example 2, a stretched polyester fiber was obtained.

### Example 4

A 20 % by weight dispersion of Al-doped product was prepared by using 1,4-butanediol (tetramethylene glycol) in place of 1,2-ethanediol (ethylen glycol). In the same manner as Example 2, a stretched polyester fiber was obtained.

### Example 5

A 20 % by weight dispersion of Al-doped product was prepared using 1,6-hexanediol (hexamethylene glycol) in place of 1,2-ethanediol (ethylene glycol). In the same manner as Example 2, a stretched polyester fiber was obtained.

During all the steps of the spinning process for the manufacture of polyester yarn from the stretched polyester fiber obtained in Examples 2 to 5, the polyester fibers were stable, and no disadvantageous thread breakage was observed whatsoever. Three sorts of fabric obtained by processing the polyester yarns of Examples 2 to 5 were immersed in a 4 % by weight aqueous sodium hydroxide solution maintained at a temperature of 95 °C whereby the quantity of alkali was reduced, and were employed for a dyeing test. All the three fabricc dyed with dispersed dyestuff exhibited a particular deep colour character and a good texture, from which hardness and sliminess were eliminated.

### Comparative Example 3

Using a 16.7 % by weight dispersion of Aerosil MOX80 according to Comparative Example 1 which had passed through a filter with a mesh size of 5 µm, esterification was conducted under conditions equal to Example 2. Agglomeration was so severe that filtration was impossible.

### Comparative Example 4

An esterification test was conducted, using a 16.7 % by weight dispersion of Aerosil OX50 of Comparative Example 2. Agglomeration was so severe that filteration was impossible.

### Example 6

87 parts by weight of terephthalic acid and 65 parts by weight of 1,2-ethanediol (ethylene glycol) (the molar proportion of ethylene glycol/terephthalic acid was 2/1) were reacted under normal pressure at 220 °C to effect esterification. When the esterification rate became 94 %, 10 parts by weight of 1,2-ethanediol (ethylene glycol) dispersing 20 % by weight of Al-doped product, which had been prepared in Example 1 and had been passed through a filter with a mesh size of 5 µm, were incorporated with 132 parts by weight of this oligomer (equal to 100 parts by weight of polyester). Subsequently, the pressure was reduced while the temperature was raised to 220 to 285 °C and using Sb₂O₃ as polymerisation catalyst; subsequently, polycondensation was conducted at 285 °C and 1 mmHg to provide polyester polymer.

Thus obtained polyester polymer was dried and then melt-extruded at 290 °C on a cooling rotary quenching drum to provide an amorphous sheet. The sheet was stretched 3.5-fold longitudinally and 4.3-fold laterally to provide a biaxially stretched polyester film with a thickness of 15 µm.

### Example 7

In the same manner as in Example 6, 1,3-propanediol (trimethylene glycol) was employed in place of 1,2-ethanediol (ethylene glycol), to provide a biaxially stretched polyester film with a thickness of 15 µm.

### Example 8

In the same manner as in Example 6, 1,4-butanediol (tetramethylen glycol) was employed in place of 1,2-ethanediol (ethylene glycol), to provide a biaxially stretched polyester film with a thickness of 15 µm.

### Example 9

In the same manner as in Example 6, 1,6-hexanediol (hexamethylen glycol) was employed in place of 1,2-ethanediol (ethylene glycol), to provide a biaxially stretched polyester film with a thickness of 15 µm.

In Examples 6 to 9, the dispersion state of particles in the biaxially stretched polyester films were observed with a microscope, confirming that agglomerate content with a particle size over 10 µm was less than 10 particles per 100 cm². It was confirmed that the dispersion state was very good.

Subsequently, the films of Examples 6 to 9 were cut into tapes with 1/2 inch width, and each tape was repeatedly run over a metal guide using a high speed type tape-running tester in order to test the scratch resistance. The diameter of the metal guide was 6 mm, the material quality was SUS (surface-roughness 0.2 S), the wrap angle was 180°. After 50 passages of running at a speed of 1000 m/minute, scars generated in the film were observed with a microscope. Scars were hardely observed in any of the films of Examples 6 to 9, and, therefore, an excellent scratch resistance was confirmed. Moreover, in line with JIS K 7105 and JIS K 6714, the haze values of all the films measured by an integral HTR meter were 0.2 %, and a good transparency was confirmed.

### [Effect of the invention]

As mentioned above, according to the present invention, an aerosil is produced from an aqueous solution or dispersion of aluminum chloride. A gas mixture, wherein silicon chloride or silanes are mixed with oxygen and hydrogen, is uniformly mixed with the aerosol; the mixture of aerosol and gas mixture is subjected to flame hydrolysis in order to dope 0.05 to 1.0 % by weight of aluminium oxide into silica powders; by the incorporation of the doped silica powders with an average particle size of 5 to 5 nm, a dispersing ability of the dispersion improved. 1 to 60 parts by weight of said silica powders are incorporated with glycols based on 100 parts by weight of the glycols, and uniformly dispersed. Subsequently, crude particles with a particle size over 5 µm present in the dispersion are eliminated by filtration. Thus obtained raw material dispersion is mixed with terephthalic acid to effect esterification, whereby agglomerate, which may be caused by heat shock and acid shock of the silica powder, is hardly generated. Consequently, in case of polyester fiber produced thereof, thread breakage hardly occurs during spinning step, weaving step and knitting step, and it is possible to dye a polyester fabric into deep color and to obtain the cloth with a good texture. In case of that polyester films produced thereof, since the film surface contains silica powders, it has good at abrasion resistance, lubricating property and mar resistance. In case the film is processed into a magnetic tape film, the scratch resistance improves, while the electromagnetic transfer characteristics are not reduced, and drop-outs do not occur.

### [Brief explanation of drawings]

### [Fig. 1]

Fig. 1 shows apparatus for the process for the manufacture of silica powders dispersed in the present raw material dispersion for the manufacture of polyester.

### [Fig. 2]

Fig. 2 shows the viscosity as function of silica powder content, in the dispersions of Example 1, Comparative Example 2 and Comparative Example 2.

### [Fig. 3]

Fig. 3 shows the particle size distribution curves of silica powders in the dispersions of Example 1, Comparative Example 1 and Comparative Example 2.

### [Fig. 4]

Fig. 4 shows the particle size distribution curves of the Al-doped product which is dispersed in 1,2-ethanediol (ethylene glycol) dispersion according to Example 1, before and after reflux.

### [Fig. 5]

Fig. 5 shows the particle size distribution curves of Aerosil MOX80 which is dispersed in 1,2-ethanediol (ethylene glycol) dispersion according to Comparative Example 1, before and after reflux.

### [Fig. 6]

Fig. 6 shows the particle size distribution curves of Aeosil OX50 which is dispersed in 1,2-ethanediol (ethylene glycol) dispersion according to Comparative Example 2, before and after reflux.

Explanation of marks in Figure 1
- 1.: Burner
- 2.: Central feeding tube
- 3.: Nozzle
- 4.: Ring nozzle
- 5.: Axial flow tube
- 6.: Aerosol generator
- 7.: Heating zone
- 8.: Combustion chamber
- 9.: Flame tube
- 2a, 4a.: Feeding tube

### [Summary]

### [Purpose] Suppression of agglomeration of silica powders during esterification by mixing with diols.

### [Means for solution]

Raw material dispersion for the manufacture of polyester, wherein 1 to 60 parts by weight of silica powder with an average particle size of 5 to 50 nm are uniformly dispersed in glycols based on 100 parts by weight of the glycols. The raw material dispersion for the manufacture of polymers is mixed with terephthalic acid or dimethyl terephthalate and subjected to esterification under pressure at a temperature of 200 to 300 °C to produce a polyester polymer. In case of that polyester fiber or polyester film is produced from the polyester polymer, the particle size of a silica powder agglomerate contained in said polyester fiber or polyester film is less than 5 µm.

## Claims

1. Raw material dispersion for the manufacture of polyester wherein 1 to 60 parts by weight of silica powder with an average particle diameter of 5 to 50 nm are uniformly dispersed in glycols based on 100 parts by weight of the glycols, **characterized in that** the particle diameter of silica powder agglomerate contained in a polyester fiber or polyester film which is manufactured by blending the raw material dispersion with terephthalic acid or dimethyl terephthalate, esterification of the mixture under pressure at a temperature of 200 to 300 °C to produce the polyester and therefrom subsequently polyester fibers or polyester films, is less than 5 µm.

2. Silica powder of low agglomeration, which is dispersed in the raw material dispersion for the manufacture of polyester according to Claim 1.

3. Process for the preparation of a raw material dispersion for the manufacture of polyester, **characterised in that** an aerosol is produced from an aqueous solution or aqueous dispersion of aluminum chloride, said aerosol is uniformly mixed with a gas mixture of silicon chloride or silanes and oxygen and hydrogen, said mixture of aerosol and gas mixture is subjected to flame hydrolysis to form a silica powder with an average particle diameter of 5 to 50 nm, which is doped with 0.05 to 1.0 % by weight of aluminum oxide, 1 to 60 parts by weight of said silica powder are added to glycols based on 100 parts by weight of the glycols, and uniformly dispersed, and subsequently, crude particles of a particle diameter of more than 5 µm contained in said dispersion are eliminated by filtration.

4. Process for the manufacture of polyester fibers, wherein a raw material dispersion for the manufacture of polyester according to Claim 1 and terephthalic acid or dimethyl terephthalate are mixed, and simultaneously stirred to form a slurry, said slurry is maintained under pressure at 200 to 300 °C for 2 to 3 hours, so that esterification between glycols and said terephthalic acid or dimethyl terephthalate occurs to form a polyester polymer and chips made of said polyester polymer are melted and spun to produce polyester fibers.

5. Polyester fibers manufactured by the process of Claim 4.

6. Method for dyeing a fabric made of polyester fiber, wherein said polyester fiber is manufactured by the process of Claim 4, said fabric is brought into contact with an aqueous alkali solution of 90 to 100 °C in order to elute silica powder from the surface of said polyester fiber constituting said fabric, and subsequently the fabric is dyed.

7. Process for the manufacture of polyester films, wherein raw material dispersions for the manufacture of polyester according to Claim 1 and terephthalic acid or dimethyl terephthalate are mixed, and stirred to form a slurry, said slurry is maintained under pressure at 200 to 300 °C for 2 to 3 hours, so that esterification between glycols and said terephthalic acid or dimethyl terephthalate occurs to form a polyester polymer, and chips made of said polymer are melted, and subsequently the melt is extruded and stretched into a sheet to manufacture polyester film.

8. Polyester film manufactured by the process of Claim 7.
